# EUROPÄISCHE PATENTSCHRIFT

(11) **EP 1 243 663 B1**
(45) Veröffentlichungstag und Bekanntmachung des Hinweises auf die Patenterteilung: **16.02.2005**
(21) Anmeldenummer: 02006033.1
(22) Anmeldetag: 16.03.2002
(51) Int. Cl.: C22B 7/00, C22B 21/00, F27B 7/20

(54) **Verfahren und Vorrichtung zum Einschmelzen von Aluminiumschrott**
Method and apparatus for melting aluminium scrap
Procédé et dispositif pour la fusion de déchets d'aluminium

(30) Priorität: 23.03.2001 DE 10114179
(43) Veröffentlichungstag der Anmeldung: 25.09.2002
(73) Patentinhaber: Linde AG, 65189 Wiesbaden (DE)
(72) Erfinder: Gräb, Hans-Walter, 52538 Selfkant (DE); Göpp, Kamill, 65830 Kriftel (DE); Zschiesche, Hartmut, 04874 Belgern (DE); Raasch, Burghard, 23829 Kükels (DE)
(74) Vertreter: Kasseckert, Rainer

(56) Entgegenhaltungen:
- EP-A- 0 475 128
- EP-A- 0 553 632
- EP-A- 0 756 014
- US-A- 4 548 651
- US-A- 5 186 622
- US-A- 5 673 900

## Beschreibung

Die Erfindung betrifft ein Verfahren zum Einschmelzen von kontaminiertem Aluminiumschrott in einem Drehtrommelofen mit einem Brenner, einer Sauerstoffzufuhr, einem Abzug, einem Messgerät im Abgas und mit einer Steuerung.

In Metallschmelzöfen, wie Drehtrommelöfen, in denen Recyclingmaterial, insbesondere Aluminiumschrotte rückgewonnen werden, entstehen häufig Schwelgase und Abgase mit hohen Konzentrationen an unerwünschten Kohlenstoffverbindungen, wie Kohlenwasserstoffe und Kohlenmonoxid. Da die eingesetzten Aluminiumschrotte häufig Lackierungen, Kunststoffbeschichtungen und ähnliche Verunreinigungen enthalten, entsteht beim Erhitzen dieser Materialien ein Dampf, der diese unerwünschten Stoffe enthält. Diese Stoffe werden pyrolisiert und zum Teil verbrannt oder aufoxidiert oder aber- im schlechtesten Fall - in giftige dioxin- oder furanhaltige Komponenten umgewandelt. Eine vorherige Reinigung und Entfernung der Kunststoffkomponenten würde dieses Problem vermeiden, ist jedoch zu aufwendig.

Zur Behandlung solcher Aluminiumschrotte ist aus der EP 666328 A 1 ein Verfahren bekannt, bei dem der Schrott durch eine spezielle Schwelkammer in den Schmelzherd eingeführt wird. Durch die langsame Erwärmung in der Schwelkammer werden die organischen Stoffe pyrolysiert und in der Ofenatmosphäre weiter umgewandelt. Nachteilig dabei ist, dass der Schrott relativ kleinteilig zugegeben werden muss, damit er in den relativ engen Schwelkanal eingeführt werden kann.

Aus der EP 475128 B 1 ist ein Verfahren zum Verringern von schädlichen Verbindungen in den Abgasen eines brennbefeuerten Schmelzofens bekannt, bei dem sauerstoffreiches Gas in einer Gegenströmung zugeführt wird. Die Vorrichtung erfordert einen speziellen Ofen, in dem die Richtung des Brenners und die Richtung der Sauerstofflanzen vorgegeben sind. Sie eignet sich nicht für Drehtrommelofenanlagen, die nur eine Öffnung an einer Seite haben.

Aus der EP 756014 A 1 ist ein Verfahren zum Einschmelzen von Aluminiumschrott in einen Drehtrommelofen bekannt, bei dem ein Brenner vorgesehen ist, eine Sauerstoffzufuhr und ein Abzug für die verbrannten Gase, in dem ein Messgerät im Abgas angeordnet ist. Diese Vorrichtung bildet den Oberbegriff des Anspruchs 1. Das dort beschriebene Messgerät misst die Konzentration der Kohlenwasserstoffe im Abgas und regelt darüber die Sauerstoffzufuhr zur Flamme. Es hat sich nun im Betrieb herausgestellt, dass diese Anlage beim Einschmelzen von hochkontaminierten Aluminiumschrotten nicht ausreichend sicher fahrbar ist, da allein die Messung der Kohlenwasserstoffe im Abgas keine ausreichende Information über die Menge des pyrolysierten Kohlenwasserstoffmateriales ergibt.

Aufgabe der Erfindung ist es daher, eine solche Vorrichtung dahingehend zu verbessern, dass auch hochkontaminierte Aluminiumschrotte sicher und umweltverträglich in großen Chargen eingeschmolzen werden können.

Diese Aufgabe wird erfindungsgemäß gelöst von einer Vorrichtung mit den Merkmalen des Anspruchs 1. Ausführungen der Erfindung sind Gegenstände von Unteransprüchen.

Erfindungsgemäß wird im Abgas der O₂-Gehalt gemessen und dieser Wert als Führungsgröße für die Steuerung bei der Pyrolyse der Verunreinigungen und/oder beim Einschmelzen des Aluminiums verwendet. Die Verwendung des Sauerstoffwertes im Abgas ergibt ein sicheres Regelkriterium, nach dem der Ofen gefahren werden kann. Werden bei Beginn der Schmelze hohe Mengen an Kohlenwasserstoffen pyrolysiert, ohne vollständig zu verbrennen, so sinkt der Sauerstoffgehalt in der Ofenatmosphäre. Die Regelung nach der Sauerstoffmenge im Abgas lässt eine wesentlich feinere und empfindlichere Dosierung der Steuerung des Verfahrens zu als die Regelung nach dem CO-Wert oder nach den Kohlenwasserstoffen im Abgas.

In einer Ausführung der Erfindung wird auch der CO-Gehalt des Abgases als Messwert aufgenommen. Dieser Messwert wird bevorzugt als Sicherheitsgröße verwendet. Die Regelung des Verfahrens erfolgt dann über den O₂-Wert, während die CO-Messung als Sicherheitsgröße übergeschaltet ist und erst bei Überschreiten eines bestimmten Grenzwertes die Vorrichtung abschaltet. Diese Sicherheitsregelung erhöht die Gesamtsicherheit der Anlage nochmals. Mit dieser doppelten Absicherung ist das Abschwelen in die Verbrennung der entstehenden Schwelgase im Ofengefäß ausreichend zuverlässig gewährleistet.

Der Messwert des Sauerstoffgehalts und/oder der Messwert des CO-Gehalts steuern bevorzugt die Drehbewegung des Ofens und/oder das Einblasen von Sauerstoff im sicheren Zustand. Der Brenner ist zur Sicherheit immer in Betrieb und dient als Pyrolyseflamme. Das Anhalten der Drehbewegung des Drehtrommelofens verursacht eine kleinere Aluminiumoberfläche und dadurch eine geringere Pyrolyse der Komponenten. Dadurch kann der Sauerstoffgehalt der Atmosphäre wieder ansteigen und kann so immer im sicheren Bereich gehalten werden. Erkennt die Regelung dann, dass weniger pyrolysiert wird, kann der Ofen in Schritten wieder angefahren werden, wodurch die Aluminiumoberfläche größer wird und wieder eine neue Pyrolyse stattfinden kann, bei der neue Kohlenwasserstoffe zu CO verbrannt werden. Dieses kann durch Zugeben von O₂ vollständig zu CO₂ verbrannt werden oder, wenn das nicht reicht, wieder zu einem Stillsetzen des Ofens führen, wodurch die Pyrolyse wieder verringert wird. Auf diese Weise kann der Ofen sicher automatisch gefahren werden, auch wenn sehr große Mengen an organischen Verunreinigungen am Aluminium haftend zugegeben wurden. Reinigungs- und Zerkleinerungsschritte vor dem Einschmelzen können so entfallen, wodurch der Gesamtbetrieb der Anlage billiger wird.

Weitere Vorteile, Merkmale und Ausgestaltungen der Erfindung werden anhand eines Ausführungsbeispiels näher erläutert.

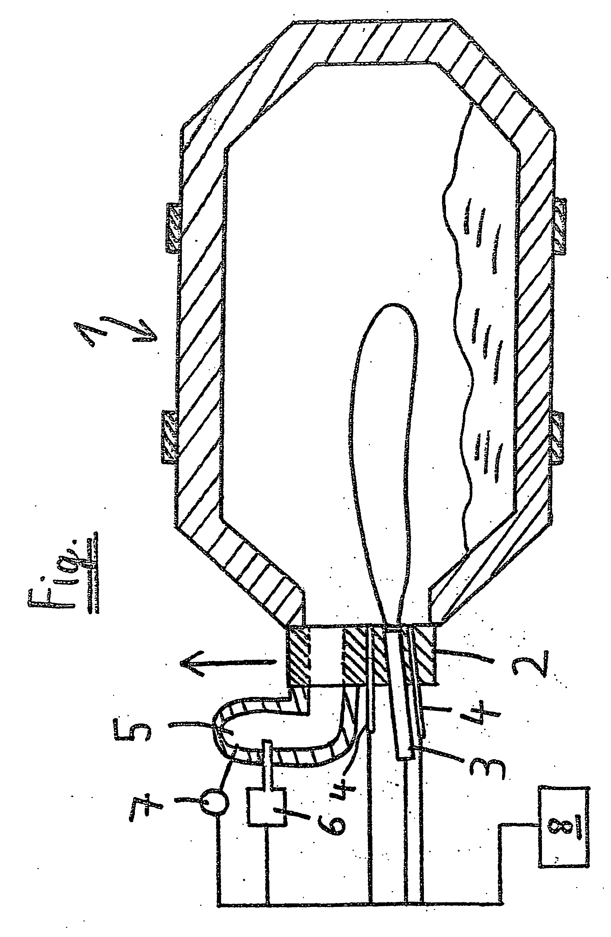

Die Figur zeigt einen Drehtrommelofen (1) mit der Tür (2), die sowohl zum Beschicken als auch zum Verschließen des Ofens (1) dient. In dieser Ausführung ist in der Tür (2) ein Sauerstoffbrennstoffbrenner (3) angeordnet, der die Hitze für den Schmelzbetrieb bringt. Weiterhin enthält die Tür (2) in diesem Ausführungsbeispiel mehrere Sauerstofflanzen (4), die in der Nähe der Brennerflamme angeordnet sind und den Sauerstoffgehalt in der Ofenatmosphäre wesentlich beeinflussen bzw. vergrößern können. In der Tür (2) ist hier auch noch ein Abgaskanal (5) angeordnet, in dem eine Rauchgassonde (6) und ein Thermoelement (7) angeordnet sind. Die Messwerte des Messgerätes (6) und des Thermoelements (7) werden an eine Steuerung (8) geleitet, die sowohl die Drehung des Ofens (1) und die Sauerstoffzufuhr zu den Lanzen (4) regelt.

Zum Beginn des Einschmelzvorgangs wird die Tür (2) geöffnet und der Ofen (1) wird mit Aluminiumschrott gefüllt, der grobstückig sein kann. Der Brenner startet und die Tür (2) wird dann geschlossen. Zunächst steht der Ofen (1). Die Flamme des Brenners (3) erhitzt den Aluminiumschrott und führt zum Beginn einer Pyrolyse der organischen Komponenten. Die Pyrolyse wird über die Sauerstoffmessung im Abgas erkannt. Bei zu niedrigen Sauerstoffwerten bleibt der Ofen (1) stehen. Ist die Pyrolyse beendet, z. B. wenn der Sauerstoffgehalt wieder über 14 % ansteigt, wird der Ofen in Drehbewegung gesetzt und dreht sich für eine bestimmt vorgegebene Ofendrehzeit weiter. Dann wird im Abgas wieder der Gehalt des Sauerstoffs gemessen. Treten unverbrannte Schwelgase im Abgas auf, werden diese also erkannt durch ein spezielles Schmelzprogramm wird über die Lanzen (4) Sauerstoff in das Ofengefäß (1) geblasen. Dies führt zu einer Verbrennung der Schwelgase im Ofen (1). Ist durch den eingesetzten Schrott der Anfall an Schwelgasen so hoch, dass die Gase nicht mehr vollständig im Ofen (1) verbrannt werden können, so wird dies vom Messgerät (6) erkannt, die Drehung des Ofens wird gestoppt und der Ofen in den sicheren Zustand versetzt. Dies reduziert die weitere Entstehung von Schwelgasen. Werden vom Messgerät (6) dann nach einiger Zeit keine Schwelgase mehr im Abgas erkannt, dreht der Ofen (1) entsprechend der programmierten Werte weiter. Dieser Vorgang kann sich je nach Schrott mehrmals wiederholen, wobei eine Verfahrensführung entweder manuell oder automatisch erfolgen kann. Sind alle organischen Anhaftungen verbrannt, wird im Ofen (1) konventionell mit dem Sauerstoffbrenner (3) fertig geschmolzen. Die übergeordnete CO-Überwachung schaltet z. B. bei CO-Gehalten über 3 % die Anlage ab und versetzt den Ofen (1) in den sicheren Zustand (Ofen (1) steht, Brenner (3) in Stufe 1 und die O₂-Lanzen (4) werden nacheinander zugetaktet). Wird ein CO-Gehalt < 1,5 % vom Messsystem erkannt, werden die selbigen eingestellten, technologischen Parameter wie vor der Aktivierung des Sicherheitsmodus zum weiteren Betrieb des Ofens (1) herangezogen.

## Patentansprüche

1. Verfahren zum Einschmelzen von kontaminiertem Aluminiumschrott in einem Drehtrommelofen (1) mit einem Brenner (3), einer Sauerstoffzufuhr (4), einem Abzug (5) mit Messgerät (6) im Abgas und einer Steuerung (8), **dadurch gekennzeichnet, dass** der Sauerstoffgehalt des Abgases gemessen wird und dieser Wert als Führungsgröße der Steuerung bei der Pyrolyse der Verunreinigungen und/oder beim Einschmelzen des Aluminiums verwendet wird.

2. Verfahren nach Anspruch 1, **dadurch gekennzeichnet, dass** auch der CO-Gehalt gemessen wird und als Sicherheitsgröße dient.

3. Verfahren nach Anspruch 1 oder Anspruch 2, **dadurch gekennzeichnet, dass** die Steuerung die Drehung des Ofens (1) und/oder die Einblasung von Sauerstoff beeinflusst.

4. Vorrichtung zum Einschmelzen von kontaminiertem Aluminiumschrott mit einem Drehtrommelofen (1), einem Brenner (3), einer Sauerstoffzufuhr (4), einem Abzug (5) mit Messgerät (6) im Abgas und einer Steuerung (8), **dadurch gekennzeichnet, dass** das Messgerät (6) ein Sauerstoffdetektor ist.

5. Vorrichtung nach Anspruch 4, **dadurch gekennzeichnet, dass** zusätzlich ein CO-Detektor im Abgas vorgesehen ist.

## Claims

1. Process for melting down contaminated aluminium scrap in a rotary drum furnace (1) having a burner (3), an oxygen feed (4), a vent (5) with measuring device (6) in the exhaust gas and a control unit (8), **characterized in that** the oxygen content of the exhaust gas is measured, and this value is used as a guide variable for the control unit during the pyrolysis of the impurities and/or during melting-down of the aluminium.

2. Process according to Claim 1, **characterized in that** the CO content is also measured and used as a safety variable.

3. Process according to Claim 1 or Claim 2, **characterized in that** the control unit influences the rotation of the furnace (1) and/or the injection of oxygen.

4. Apparatus for melting down contaminated aluminium scrap, having a rotary drum furnace (1), a burner (3), an oxygen feed (4), a vent (5) with measuring device (6) in the exhaust gas and a control unit (8), **characterized in that** the measuring device (6) is an oxygen detector.

5. Apparatus according to Claim 4, **characterized in that** a CO detector is additionally provided in the exhaust gas.

## Revendications

1. Procédé de fonte de déchets d'aluminium contaminés dans un four (1) à tambour rotatif qui présente un brûleur (3), une amenée d'oxygène (4), une évacuation (5) qui présente un appareil de mesure (6) dans les gaz de fumée et un dispositif de commande (8), **caractérisé en ce que** la teneur en oxygène des gaz de fumée est mesurée et que cette valeur est utilisée comme grandeur de référence de la commande lors de la pyrolyse des impuretés et/ou lors de la fonte de l'aluminium.

2. Procédé selon la revendication 1, **caractérisé en ce que** la teneur en CO est également mesurée et sert de grandeur de sécurité.

3. Procédé selon les revendications 1 ou 2,
**caractérisé en ce que** le dispositif de commande agit sur la rotation du four (1) et/ou sur l'injection d'oxygène.

4. Dispositif de fonte de déchets d'aluminium contaminés, qui présente un four (1) à tambour rotatif, un brûleur (3), une amenée d'oxygène (4), une évacuation (5) qui présente un appareil de mesure (6) dans les gaz de fumée et un dispositif de commande (8), **caractérisé en ce que** l'appareil de mesure (6) est un détecteur d'oxygène.

5. Dispositif selon la revendication 4, **caractérisé en ce qu'**un détecteur de CO est en outre prévu dans les gaz de fumée.
